# EUROPEAN PATENT APPLICATION

(11) **EP 4 235 102 A1**
(43) Date of publication of application: **30.08.2023**
(21) Application number: 23158635.5
(22) Date of filing: 24.02.2023
(51) Int. Cl.: G01C 21/20

(54) **METHOD OF PROVIDING A NAVIGATION PATH IN AN ENCLOSED ENVIRONMENT**

(30) Priority: 25.02.2022 IT 202200003635
(71) Applicant: Qvadis S.r.l., 34148 Trieste (TS) (IT)
(72) Inventor: JUKIC, Vedran, 34133 Trieste (TS) (IT); AZIABOR, Koffi Serges Lawrey, 34144 Trieste (TS) (IT)
(74) Representative: Braidotti, Andrea

(57) **Abstract**

Method of providing a navigation path in a closed environment, which method comprises a step of mapping said environment, wherein a plurality of main points of interest within said environment are defined; a step of arranging a plurality of scannable elements at at least said plurality of main points of interest; a phase of definition of a plurality of secondary points of interest within said environment; a phase of processing possible navigation paths within said environment between said scannable elements and said main points of interest and/or said secondary points of interest, a saving phase, in which said possible navigation paths are saved electronically in said electronic unit; said electronic unit being electronically connectable to a personal electronic device of at least one user and configured to send to said personal electronic device at least one said navigation path selected by said user.

## Description

### TECHNICAL FIELD

The present invention relates to a method for providing a navigation path in a closed environment, also to be understood as semi-closed or confined to one or more levels. More specifically, the present invention relates to a method for providing a user with navigation instructions within a private environment, in particular open to the public, such as for example a hospital, a shopping centre, an amusement park or the like.

More in detail, the present invention relates to a method for providing a path that a user can follow to reach a desired position within the private environment.

Therefore, the present invention finds advantageous use in the technical field of the production, distribution and marketing of systems, appliances, infrastructures and methods in general for navigating a user.

### BACKGROUND ART

Many methods for providing a navigation path are known in the reference technical field, in particular navigation methods and systems based on global positioning systems (GPS) of the satellite type for road navigation are known.

However, these known methods based on GPS are unable to provide navigation assistance in private environments, whether they are closed environments, such as for example hospitals, shopping centers or open environments such as, for example, amusement parks or the like, or even environments semi-enclosed or confined such as tourist villages or cruise ships.

A method for navigation in closed environments, in particular in buildings, by means of the use of a smartphone by the user is known in the reference technical sector.

In more detail, the known method involves scanning QR codes (Quick Response Codes) present within the environment to retrieve, through the smartphone itself, useful information for contextualizing information concerning the building in which it is located. In more detail, the known method provides for the application of appropriate QR codes inside museums or the like, in particular in the vicinity of works of art or cultural, historical or scientific objects that the user can view and appreciate.

The method of the known type is performed by means of a computer equipment with which the user's smartphone can be connected in a data connection via the URL Internet address contained in the QR code.

The computer equipment for the known type of method comprises a server in which a database of the various works is saved, to which a corresponding QR code is associated. The known method involves providing the user, by scanning the QR code, with additional information to that already present and/or visible near the work.

Furthermore, each work and each QR code is associated with a presentation of the work which is conveniently sent to the user's smartphone following the scanning of the QR code itself. In this way, the user is able to independently observe and appreciate the works inside the museum.

However, in practice, the knot-type method briefly described above has proved to be not free from drawbacks.

The main drawback lies in the fact that the user is not able to orient himself within the internal environment, in particular the building, in an appropriate manner, as there is in fact no navigation directive in the information contained in the inside of the description associated with each QR code.

A further drawback of the prior art lies in the fact that the known method does not in any way provide for helping the user to reach the QR codes to be scanned in order to obtain the aforementioned additional information. Otherwise, the known type method only requires the user to scan the code and therefore be able to reach it independently.

A further drawback lies in the fact that the method does not in any way allow a user to orient himself within the environment in which the QR codes are placed.

Examples of methods for providing a navigation path are described in documents US10663302 and CN111288996.

These documents describe the production of extremely precise maps created with great care and a consequent long realization time, even days or months for large structures and interiors such as hospitals or shopping centres, with obviously consequent prohibitive costs. These known methods provide for producing a navigation path for the end user while completely ignoring the cost both in terms of time and money, as well as the technical complexity of carrying out the mapping.

### OBJECTS OF THE INVENTION

The object of the present invention is to propose a method for providing a navigation path in a closed environment which allows to obviate, at least in part, the drawbacks of the known art mentioned above.

A further object of the invention is to provide a method for providing a navigation path which allows to provide a user with effective help in navigating within an environment, for example a building.

A further object of the invention is to provide a method for providing an active navigation path that uses cheap and easily available instrumentation.

A further object of the present invention is to provide a method for providing a navigation path which is easy to implement by the user, even if he is not very expert in IT devices. A further object of the present invention is to provide a method for providing a navigation path which is easy to implement.

A further object of the present invention is to provide a method for providing a navigation path which does not use geolocation, radiolocation, magnetolocation services.

A further object of the present invention is to provide a method for providing a navigation path which is economically advantageous.

A further object of the present invention is to provide a method for providing a navigation path which is functionally completely reliable.

Another object of the present invention is to propose a method for providing a navigation path which is alternative and/or better than traditional solutions.

All these objects, both individually and in any combination thereof, and others which will result from the following description are achieved, according to the invention, with a method for providing a navigation path having the characteristics indicated in claim 1.

### DETAILED DESCRIPTION OF THE INVENTION

The method here disclosed finds advantageous use in the technical field of the supply of personal navigation services, and in the technical sector of the production and marketing of electronic and/or computer equipment for personal navigation.

The method for providing a navigation path in a closed environment object of the present invention is suitably applicable to substantially any type of environment, be it a private environment or a public environment. The method in question can, for example, be advantageously used inside a hospital building, or inside a commercial building (for example a shopping center or the like) or even inside the environment of an amusement park or the like.

The method for providing a navigation path in a closed environment, object of the present invention, comprises a step of mapping said environment, in which a plurality of main points of interest within said environment are defined.

Advantageously, the main points of interest are defined as topographic points within the environment to be mapped of possible interest for a user or customer, for example an entrance, an exit, a reception, toilets, or the like. Furthermore, the main points of interest can be defined by topographical positions of the enclosed environment of specific interest: for example, within a hospital the main points of interest may include clinics, pharmacies or the like.

The method also provides for a step of arranging a plurality of scannable elements at at least said plurality of main points of interest.

Preferably, the scannable elements comprise corresponding two-dimensional barcodes, for example QR codes or the like. Advantageously, each scannable item is configured to be scanned by a user with a personal electronic device, such as a smartphone equipped with a camera or the like (e.g. tablets, laptops or the like).

The method also provides for a phase of definition of a plurality of secondary points of interest within said environment.

Advantageously, said secondary points of interest correspond to possible branches of the navigation path.

In more detail, the secondary points of interest can include any crossroads, or the presence of stairs, or the presence of lifts or the like.

The method preferably also provides for at least one association step, within an electronic unit, of said secondary points of interest to said main points of interest.

In more detail, the method involves associating each main point of interest with one or more secondary points of interest contiguous to it.

Advantageously, said electronic unit comprises at least one microcontroller, be it a microprocessor or a programmable logic controller (PLC) or again a computer and/or a server.

Preferably, the electronic unit is compact, i.e. suitably equipped with small dimensions so as to be installed easily and comfortably.

For example, in the case in which a main point of interest is defined by an entrance, the method envisages associating the subsequent secondary points of interest to it, for example a possible atrium with lifts or stairs or the like.

The method also provides for a step for processing possible navigation paths within said environment between said scannable elements and said main points of interest and/or said secondary points of interest.

Preferably, the processing step makes it possible to generate a plurality of navigation paths within the closed environment, defining a path that can be traveled by the user from one point of interest to the next, in particular whether it is a main or secondary point of interest.

Advantageously, the navigation path can comprise one or more further intermediate points of interest between a starting point of interest and an ending point of interest. Preferably, the processing step of the method provides for selecting at least one intermediate point of interest, preferably a point of interest that can be easily identified by the user.

For example, the processing phase may envisage incorporating only the points of interest essential for the user's navigation in a given navigation path, leaving out any points of interest that are not useful or not visible to the navigation of the particular path.

The method also provides for a saving step, in which said possible navigation paths are saved electronically in said electronic unit.

Advantageously, for this purpose, the electronic unit comprises at least one memory module, electronically connected to a processing module.

The electronic unit is electronically connectable, in particular via a wireless data link (for example via Wi-Fi, or 4G or 5G or the like), to a personal electronic device of at least one user and configured to send to said personal electronic device at least one said navigation path selected by said user.

In this way, the method according to the invention allows to provide the user with a navigation path within the environment in which he is located, quickly and easily.

Advantageously, said processing step involves processing all possible navigation paths between all the scannable elements of said plurality of scannable elements and all the main points of interest of said plurality of main points of interest and/or all secondary points of interest of said plurality of secondary points of interest.

More specifically, the processing phase defines a different navigation path for each possible route variation that can be taken within the closed environment. Advantageously, said saving step envisages saving all the possible navigation paths elaborated in said processing step within a database.

Conveniently, as anticipated above, the method according to the invention preferably provides for a step of scanning at least one aforesaid element which can be scanned by a user using said personal electronic device.

Otherwise, the method may provide for a selection of the desired point of interest from a list on one's personal device.

Advantageously, the scanning step envisages, in a possible embodiment of the present invention, commanding the user's personal electronic device to perform some sub-steps. In more detail, the scanning phase involves automatically opening a web browser (any chosen or pre-installed on the user's personal electronic device, such as a smartphone), preferably assigning an address (such as IP or HTML) of the server, whether available via intranet (i.e. manageable without the use of remote servers, but from local servers or from the data network) or on the internet, or even from a special IT application (App) pre-installed by the user, or installed subsequently or during first use.

As an alternative to scanning, for example because the QR code is not visible, not installed, missing or absent, or because the user is not physically close to the point of interest, or because the personal electronic device does not have a camera, or the reader of QR codes, or for any other reason is unable to scan a QR code, the user can - in particular by manually typing in the URL address (web page) indicated in several points in the building covered by the service - manually choose the point of desired interest, which can preferably be selected from tree lists, and obtain the same effect as the aforementioned scanning step.

Advantageously, the scanning phase (or selection from the list) also provides for sending a code deriving from the scanned element which defines, in particular univocally, the place (e.g. building, park, institution, service or the like), the primary point of interest and the secondary point of interest; such a code can also define a starting point, in particular from a primary point of interest.

Advantageously, said processing step and said saving step are performed before said scanning step by the user.

In more detail, the processing phase and the saving phase of all the possible navigation paths are carried out by expert operators before installing the electronic unit inside the closed environment in which to provide navigation.

Advantageously, following said scanning step, said personal electronic device of said user connects with said electronic unit.

Advantageously, said electronic unit is installed in said environment and generates a Wi-Fi data network and/or is connected to means for generating a Wi-Fi data network for data connection with said electronic device of said user.

In more detail, the electronic unit can include a Wi-Fi module configured to generate the aforementioned data network or the electronic unit can be connected to an external Wi-Fi module, in a manner known per se to those skilled in the art and therefore not described in detail below.

In this way, the network generated by the electronic unit or by suitable means of generation defines a private data network, reducing the risk of cyber attacks from outside. Preferably, the Wi-Fi module (or the Wi-Fi generation means) is electronically connected to the processing module of the electronic unit.

The method also provides for a selection phase, in which the user, following the scanning phase, selects the aforementioned arrival point of interest.

Operatively, following said scanning step of said scannable element, said user selects at least one main and/or secondary point of interest in said environment by means of said personal electronic device. In more detail, the main and/or secondary point of interest selected by the user will define the point of interest of arrival in the navigation path. Conveniently, said method therefore comprises a data sending step, in which said electronic unit sends to said personal electronic device at least one possible navigation path from said scanned scannable element to said main and/or secondary point of interest.

Advantageously, the electronic unit sends the entire selected navigation path to the user's personal electronic device, so that the user can continue browsing within the environment even without constant access to the data network.

Otherwise, if the processing module traces two or more possible navigation paths that allow the user to reach the selected point of interest starting from the point of interest where he scanned the scannable element, the processing unit sends, in a suitable data sending phase of the method according to the invention, a list of possible alternative paths. Subsequently, the user will be able to select the preferred route through the personal electronic device, which will be sent by the electronic unit.

Preferably, the saving phase envisages saving all the navigation paths within the memory module within different categories. In particular, the saving phase involves sorting all the possible navigation paths on the basis of the topographical characteristics of the points of interest crossed in the navigation path itself.

For example, the saving phase may envisage saving the navigation paths within a "healthy" category which includes all paths that involve the use of stairs instead of the elevator, or in an "overview" category " which includes routes that involve passing outside a building, etc.

In this situation, if the processing module traces two or more possible navigation paths that allow the user to reach the selected point of interest starting from the point of interest where he scanned the scannable element, the unit of processing sends the user, in the aforementioned selection phase, the possible alternatives, characterizing them with the aforementioned categories, so that the user can choose the path of the preferred typology. Advantageously, in accordance with a preferential embodiment of the present invention, said mapping step provides for photographing at least all the main points of interest and/or all the secondary points of interest.

Advantageously, following the scanning phase by the user, the user's personal electronic device sends the electronic unit a request signal, which contains at least the starting point of interest and the ending point of interest.

Operatively, the processing module of the electronic control unit traces in the memory module at least one navigation route that has such starting and ending points and sends it to the Wi-Fi module (or to the Wi-Fi generation means) for send the selected navigation route to the user's electronic device.

In this way, the method according to the invention obviates the need to equip the electronic unit with a high-performance processing module or with a high calculation capacity, since it is sufficient that it is able to trace inside the memory module the navigation path corresponding to the points requested by the user. Therefore, the electronic unit is constructively simple, reliable and economical.

Furthermore, the method turns out to be extremely rapid in sending the navigation path to the user as there is in fact no calculation of the path following the user's request but only the search for the most suitable path. In this way, the method avoids the inconvenience of long waiting times for the user due to long computational processes. Advantageously furthermore, said main points of interest and/or said secondary points of interest are saved in said electronic unit with associated at least one corresponding photograph.

Preferably, spherical photographic scans are saved in the electronic control unit, i.e. 360 degrees, and/or wide angle photos and/or a simple photograph so that the user can actively choose the planar projection towards the chosen direction and become familiar with the place by orienting the view in directions of interest.

Preferably, the mapping step provides for taking three-dimensional photographs or spatial photographs, or 360° photographs of the topographical area corresponding to each point of interest. In particular, the mapping step preferably provides for taking complete panoramic or spherical photos of the main and/or secondary points of interest. Preferably, the secondary points of interest (such as stairs, lifts, receptions or the like) are highlighted or identified within the photographs, in particular by superimposing appropriate icons on the photographs themselves.

In particular, the secondary points of interest are highlighted or identified within the photographic projections controllable by the user in direction, position and zoom, derived from spherical photographic maps, in particular by superimposing appropriate icons on the photographic projections themselves.

Advantageously, said sending step envisages sending to said personal electronic device at least one said navigation path together with one or more photos of main and/or secondary points of interest along said navigation path.

In more detail, the sending step provides for sending the navigation path, which is defined by a sequence of the aforesaid points of interest (whether they are main or secondary) together with at least one corresponding photograph. In other words, the navigation path is formed by a sequence of images, in particular panoramic or complete spherical images, each corresponding to an intermediate point of interest along the navigation path. Advantageously, the photographs received from the user's personal electronic device together with the navigation path are displayed as fully controllable two-dimensional photos, i.e. repositionable and zoomable starting from the spherical format saved in the electronic unit.

In this way, the user is able to view on his personal electronic device the photograph of the area of the environment that he will have to cross, making navigation simple and functional.

In particular, the user is able to display on his electronic device the best representative projection for the user himself, or more congenial to the user himself, of the photograph of the area of the environment that he will have to cross.

Furthermore, the processing step provides for associating a movement indication to each point of interest (whether main or secondary) in each possible navigation route. More clearly, the movement indication comprises at least one symbol and/or one or more words addressed to the user to understand what action he must take to reach the next point of interest.

Conveniently, the method according to the invention obviates the need to have operators assigned to control the electronic unit and/or to control user access, since the step of saving all possible navigation paths takes place before installation of the electronic unit and the step of sending the path itself advantageously takes place automatically.

Advantageously, the method provides for sending to the user's personal electronic device, together with the navigation route, any further information on the route, in particular for example the viability or operation of one or more sections of the route, or any working hours and /or other useful information, even information that may be non-public. Advantageously, the method according to the invention preliminarily provides for a step for selecting the language by the user, in order to obtain a navigation path in the desired language.

Advantageously, the processing phase of the various possible navigation paths involves a translation sub-phase, in which all the geographical or spatial references to be provided to the user during navigation are translated into a plurality of languages and saved within the memory module . In this way, the user can select the language most familiar to him. Preferably, the method preliminarily provides for a user authentication and/or user identification step, for security purposes and can provide for commanding the automatic opening of one or more doors in the event that the user has appropriate privileges access to certain areas of the environment.

Advantageously, the method according to the invention can provide for the generation of at least one scannable element, for example a QR code, which varies over time. For this purpose, the method provides for the installation of at least one device with suitable display means (e.g. computer, tablet or smart screen) configured to generate a corresponding scannable element which varies over time, for example which varies every minute.

Contextually, the method provides that the electronic unit verifies, at the moment of scanning by the user, if the element scannable by the user coincides with the last scannable element generated, thus ensuring the physical presence of the user in the environment closed and obviating the risk of use of the method by remote users or by possible IT attacks.

Preferably, the device for generating the time-varying scannable element is arranged at an entrance to the room, in particular to allow or prohibit the opening of a door or to send an alarm message in the event that there is a remote access.

From what has been said it is clear that the method for providing a navigation path, according to the invention, is particularly advantageous in that:
- allows you to help a user in navigating in a closed environment;
- use cheap and easily available equipment, obviating the need to use complex and/or expensive equipment;
- it is computationally inexpensive and is very quick in sending the navigation path to the user;
- it is easy to implement;
- allows you to choose the most congenial path for each user;
- uses simple, inexpensive and therefore economically advantageous electronic units;
- avoids making calculations following the user's selection, resulting extremely fast and reliable;
- it is functionally completely reliable;
- it is alternative and better than traditional solutions;
- it has an improved configuration, both in constructive and functional terms, compared to traditional solutions.

The present invention has been illustrated and described in a preferred embodiment thereof, but it is understood that executive variants can be applied to it in practice, without however departing from the scope of protection of the present patent for industrial invention.

## Claims

1. Method for providing a navigation path in a closed environment, which method includes:
- a mapping phase of said environment, in which a plurality of main points of interest within said environment are defined;
said mapping step provides for photographing at least all the main points of interest and/or all the secondary points of interest;
said main points of interest and/or said secondary points of interest are saved in an electronic unit with associated at least one corresponding photograph;
the mapping phase provides for the creation of three-dimensional photographs or spatial photographs, or 360° photographs of the topographical area corresponding to each point of interest;
- a step of arranging a plurality of scannable elements at at least said plurality of main points of interest;
- a step of definition of a plurality of secondary points of interest within said environment;
- a step of elaboration of possible navigation paths within said environment between said scannable elements and said main points of interest and/or said secondary points of interest,
- a saving step, in which said possible navigation paths are saved electronically in said electronic unit;
said electronic unit being electronically connectable to a personal electronic device of at least one user and configured to send to said personal electronic device at least one said navigation path selected by said user;
**characterized in that** it provides a scanning step of at least one said element which can be scanned by a user using said personal electronic device;
following said scanning step of said scanned element, said user selects at least one main and/or secondary point of interest in said environment by means of said personal electronic device;
said method therefore comprising a data sending step, in which said electronic unit sends to said personal electronic device at least one possible navigation path from said scanned scannable element to said main and/or secondary point of interest;
said sending step provides for sending to said personal electronic device at least one said navigation path together with one or more photos of main and/or secondary points of interest along said navigation path.

2. Method for providing a navigation path in a closed environment according to claim 1, **characterized in that** said secondary points of interest correspond to possible branches of the navigation path.

3. Method for providing a navigation path in a closed environment according to claim 1 or 2, **characterized in that** said elaboration step provides for processing all possible navigation paths between all the scannable elements of said plurality of scannable elements and all the points of interest of said plurality of main points of interest and/or all secondary points of interest of said plurality of secondary points of interest.

4. Method for providing a navigation path in a closed environment according to claim 3, **characterized in that** said saving step envisages saving all the possible navigation paths elaborated in said processing step within a database.

5. Method for providing a navigation path in a closed environment according to one or more of the preceding claims, **characterized in that** following said scanning step, said personal electrical device of said user connects with said electronic unit.

6. Method for providing a navigation path in a closed environment according to one or more of the preceding claims, **characterized in that** said electronic unit is installed in said environment and generates and/or is connected to generation means of a Wi-Fi data network for the data connection with said electronic device of said user.
